# EUROPÄISCHE PATENTANMELDUNG

(11) **EP 0 926 055 A2**
(43) Veröffentlichungstag der Anmeldung: **30.06.1999**
(21) Anmeldenummer: 98123888.4
(22) Anmeldetag: 16.12.1998
(51) Int. Cl.: B62K 3/00

(54) **Klappbares-Transportfahrzeug**

(30) Priorität: 24.12.1997 DE 19757867
(71) Anmelder: Hafner, Günter, 89143 Blaubeuren (DE)
(72) Erfinder: Hafner, Günter, 89143 Blaubeuren (DE)
(74) Vertreter: Weber, Gerhard

(57) **Zusammenfassung**

Für ein zusammenklappbares Transportfahrzeug mit einem lenkbaren Vorderrad (2) wird vorgeschlagen, Vorderrad (2) und Lenkvorrichtung (1) an einer Lenkplatte (7) zu befestigen, welche über eine ringförmige Lageranordnung (5) in einem Ausschnitt einer Trittplatte (3) des Fahrzeugs drehbar gelagert ist. Die Ebene des Lagerrings (5) liegt unterhalb der Oberkante des lenkbaren Vorderrads (2), vorzugsweise im Bereich der Höhe der Vorderradachse. Das Transportfahrzeug zeigt im zusammengelegten Zustand ein sehr geringes Packmaß und weist an einer Stirnseite vorteilhafterweise zwei Schlepprollen (6) auf. Das Fahrzeug ist sowohl für den Personentransport als auch für den Lastentransport geeignet und durch die rundum drehbare Lenkplatte (7) äußerst gut manövrierbar.

## Beschreibung

Die Erfindung betrifft ein klappbares Transportfahrzeug nach dem Oberbegriff des Patentanspruchs 1.

Klappbare Fahrzeuge dieser Art sind insbesondere im innerstädtischen Bereich durch die Möglichkeit, das Fahrzeug in zusammengeklapptem Zustand tragend oder ziehend in Gebäude oder öffentliche Verkehrsmittel mitzunehmen oder im Stauraum eines Kraftfahrzeugs unterzubringen, von erheblichem Vorteil. Kleine und wendige Fahrzeuge solcher Art sind auch vorteilhaft einsetzbar in großräumigen Betrieben oder Einrichtungen wie Flughäfen.

Typischerweise ist bei derartigen klappbaren Transportfahrzeugen eine Lenksäule in einem Lenkkopf geführt, der zugleich auch mechanische Mittel zum Klappen der Lenkvorrichtung gegenüber einer Trittplatte mit einem üblicherweise nicht lenkbaren Hinterrad trägt. Solche Transportfahrzeuge sind beispielsweise bekannt aus G 84 01 058.4 U1 oder DE 94 03 582 U1. Eine aus der WO 95/34461 A1 bekannte Anordnung sieht eine mit Streben und Versteifungen deutlich aufwendigere Lenkvorrichtung vor, bei welcher die Lenkbarkeit des Vorderrades durch Lagerung von Verlängerungen der Vorderradachse in Führungsschlitzen von Verlängerungen der Trittplatte realisiert ist.

Der vorliegenden Erfindung liegt die Aufgabe zugrunde, ein klappbares Transportfahrzeug anzugeben, daß bei geringem mechanischem Aufwand einen unkomplizierten und sicheren Betrieb im Fahrzustand ermöglicht und im zusammengelegten Zustand ein geringes Packmaß und eine gute Handhabbarkeit bietet.

Die Erfindung ist im Patentanspruch 1 beschrieben. Die Unteransprüche enthalten vorteilhafte Ausgestaltungen und Weiterbildungen der Erfindung.

Die erfindungsgemäß eingesetzte Lenkplatte erlaubt eine einfache Befestigung sowohl des Vorderrads als auch der Lenkvorrichtung an entsprechenden Haltemitteln und bietet dabei gleichzeitig durch den großen Durchmesser des Lagerrings eine in allen Fahrsituationen stabile Lagerung der Lenkanordnung. Die tiefe Lage der Lagerebene ermöglicht eine radachsnahe Positionierung einer Klappvorrichtung für die Lenkvorrichtung, woraus ein besonders günstiges Packmaß resultiert. Hinsichtlich der lenkenden Bewegung des Vorderrads in Fahrstellung ist die Lenkvorrichtung fest mit der Lenkplatte verbunden, so daß eine Direktlenkung gegeben ist. Unter Trittplatte sei ein Vorderradanordnung und Hinterradanordnung verbindender tragender Teil des Fahrzeugs verstanden, der nicht notwendigerweise die Form einer flachen oder ebenen Platte hat, sondern insbesondere auch Versteifungen aufweist und auch als Leichtbau-Gitterkonstruktion oder dgl. ausgeführt sein kann. Für den Personentransport dient eine solche Trittplatte zugleich als Trittfläche, für den Lastentransport als Ladefläche.

Für die drehbare Lagerung der Lenkplatte gegenüber der Trittplatte weisen beide genannten Platten einander zugewandte ringförmige Lagerflächen auf. Die Lagerung umfaßt vorzugsweise ein Kugellager mit zwischen den Lagerflächen laufenden Lagerkugeln, kann jedoch auch mit Lagerrollen ausgestattet oder als Gleitlager ausgeführt sein. Die Lagerlauffläche der Lenkplatte liegt dabei unter der Lagerlauffläche der Trittplatte. Die Lenkplatte kann einstückig ausgeführt sein, kann jedoch auch aus mehreren Bauteilen zusammengesetzt sein.

Die Trittplatte zeigt innerhalb des Lagerbereichs einen Ausschnitt, der vorzugsweise kreisförmig ist. Zur Sicherung der Lenkplatte in ihrer Position bezüglich der Trittplatte sind vorteilhafterweise Sicherungsmittel vorgesehen, welche durch den Ausschnitt der Trittplatte mit der Lenkplatte verbunden sind und über den Rand des Ausschnitts der Trittplatte greifen. Diese Sicherungsmittel sind vorteilhafterweise als flacher, zu der Lagerebene paralleler Sicherungsring ausgeführt.

Radaufhängungen in drehbaren Platten, deren Drehlagerebene das Vorderrad schneidet sind an sich bekannt, beispielsweise aus US 1,853,738, FR 705 063 oder DE 889 407, wobei aber kein Zusammenklappen des Fahrzeugs vorgesehen oder möglich ist. Die Lenkung greift, beispielsweise über einen Kettentrieb, an einem Ring im Lagerbereich an. Demgegenüber zeigt das erfindungsgemäße Fahrzeug mit der Direktlenkung ein für den Benutzer eines Leichtfahrzeugs, der auf der Trittplatte steht, vertrautes und dadurch vorteilhaftes Lenk- und Fahrverhalten.

Je nach Art der Ausführung der Lageranordnung kann es noch zweckmäßig oder erforderlich sein, die Lenkplatte gegen Verschiebungen parallel zur Ebene des Lagerrings zu halten und/oder zu führen. Hierfür kann beispielsweise in einer mechanisch einfachen Ausführungsform ein kreiszylindrischer Führungsring mit der Lenkplatte verbunden sein und durch den Ausschnitt der Trittplatte hindurchragen. Der Außendurchmesser des Führungsrings ist geringfügig kleiner als der Innendurchmesser des kreisförmigen Ausschnitts der Trittplatte. Führungsring und Sicherungsring bilden zusammen auch einen Schutz gegen das Eindringen vom Schmutz in die Lageranordnung. Alternativ oder zusätzlich dazu können auch mehrere in den Ausschnitt der Trittplatte ragende, und parallel zur Lenkachse drehbare und am Innenrand des Ausschnitts der Trittplatte anliegende Rollen als Führungselemente mit der Lenkplatte verbunden sein.

Die Lenkplatte ist vorteilhafterweise als ebene Platte ausgeführt, welche eine Aussparung aufweist, durch welche das Vorderrad hindurchragt. Vorzugsweise sind erste Haltemittel für die Aufhängung des Vorderrades in der Art von nach unten abstehenden Platten mit Ausfallenden zur Aufnahme einer Vorderradachse und durch den Ausschnitt in der Trittplatte nach oben weisende zweite Haltemittel zur klappbaren Befestigung einer Lenkvorrichtung auf der Lenkplatte vorgesehen. Die Halteeinrichtungen für die klappbare Lenkvorrichtung weisen vorteilhafterweise für die Klappbewegung in Richtung der Fahrstellung Anschlagelemente auf, an welchen die Lenkvorrichtung für den Fahrbetrieb festgelegt wird, insbesondere unter Verwendung von Schnellspannverschlüssen. Der seitliche Abstand der zweiten Haltemitteln für die Lenkvorrichtung von der Lenkachse ist vorzugsweise größer als der entsprechende Abstand der ersten Haltemittel, so daß die Lenkvorrichtung über die Haltemittel auf der Lenkplatte stabil abgestützt ist und der Hebelarm für die Übertragung der Lenkkräfte auf die Lenkplatte groß ist.

Die Lenkplatte kann auch eine Abstützung für eine am Vorderrad vorzusehende Bremse, insbesondere eine sogenannte V-Bremse aufweisen. Bevorzugt ist eine Bremsanordnung insbesondere eine Trommelbremsanordnung an der Hinterradanordnung vorgesehen. Durch im Bereich der Vorderkante der Trittplatte angeordnete Schlepprollen kann das Fahrzeug in zusammengeklapptem Zustand auch gezogen werden. Die Schlepprollen sind vorzugsweise hinter die Vorderkante der Trittplatte zurückgesetzt, so daR das zusammengeklappte Fahrzeug zum einen in einer schrägen Ziehposition auf den Rollen läuft und zum anderen in aufrechter Position der Trittfläche auf der Vorderkante abgestellt werden kann, ohne daß die Schlepprollen die Standfläche berühren. Die Vorderkante der Trittplatte kann vorteilhafterweise mit einem elastischen Material in Form einer Gummileiste, Kunststofflippe oder dgl. versehen sein, um die Gefahr von Beschädigungen an Gegenständen oder bei aufgestelltem Fahrzeug an der Stellfläche zu verringern.

Für die Überbrückung größerer Distanzen, insbesondere bei Einsatz des Fahrzeugs im Freizeitbereich, oder für den Transport von Lasten, kann das Fahrzeug mit einem motorischen Antrieb versehen sein, der vorzugsweise über eine Reibrolle auf einer Reifenlauffläche oder vorzugsweise über einen Zahnrad-, Riemen- oder Kettenantrieb an einer Radanordnung angreift. Hierzu wird vorzugsweise ein als Zusatzgerät anbaubares Motormodul lösbar im Bereich des angetriebenen Rades angeordnet. Die Anordnung des Motorantriebs ist konstruktiv besonders einfach an der Hinterradanordnung möglich. Durch die Radaufhängung an der Lenkplatte ist vorteilhatterweise auch eine Anordnung eines motorischen Antriebs auf der Lenkplatte möglich, welcher in entsprechender Weise auf das Vorderrad wirkt. Die Anordnung des Motorantriebs bei der Vorderradanordnung ist wegen der Gewichtsverteilung günstig für den schleppenden Transport des zusammengeklappten Fahrzeugs.

Die Erfindung ist nachfolgend anhand von bevorzugten Ausführungsbeispielen und unter Bezugnahme auf die Abbildungen noch eingehend veranschaulicht. Dabei zeigt:
- Fig. 1: eine schematisch vereinfachte Skizze eines erfindungsgemäßen Fahrzeugs in Seitenansicht
- Fig. 2: das Fahrzeug nach Fig. 1 zusammengeklappt in Ziehstellung
- Fig. 3: das Fahrzeug nach Fig. 1 zusammengeklappt in Draufsicht auf die Trittplatte
- Fig. 4: die Lenkplatte mit Einzelheiten
- Fig. 5: eine Draufsicht auf die Lenkplatte nach Fig. 4
- Fig. 6, 7: eine alternative Ausführung zu Fig. 4 und 5
- Fig. 8: einen Haltering für die Lenkplatte
- Fig. 9: einen Distanzring für die Lageranordnung
- Fig. 10: einen vergrößerten Ausschnitt aus Fig. 9
- Fig. 11: einen Ausschnitt der Lageranordnung

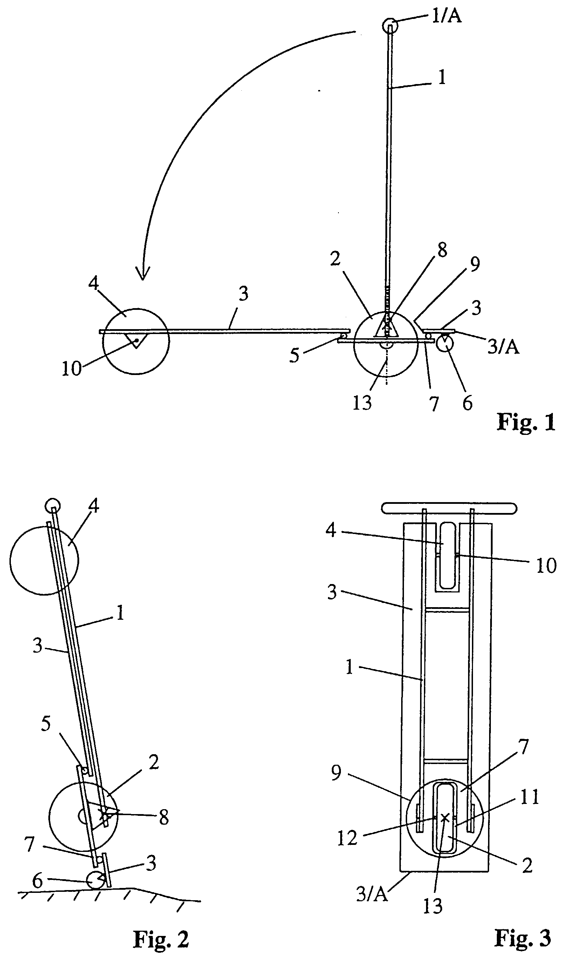

Das in Fig. 1 in stark vereinfachter Darstellung skizzierte erfindungsgemäße Fahrzeug besteht im wesentlichen aus einer Trittplatte 3, einer Hinterradanordnung 4, einer lenkbaren Vorderradanordnung 2 auf einer Lenkplatte 7, die über eine Lageranordnung 5 gegen die Trittplatte abgestützt ist, einer Lenkvorrichtung 1 sowie einer Schlepprollenanordnung 6. Die Trittplatte 3 dient als tragendes Teil zur Verbindung der Hinterradanordnung mit der Vorderradanordnung und bildet für den Personentransport eine Trittfläche, für den Lastentransport eine Ladefläche. Die Trittplatte 3 ist über die Vorderradanordnung hinaus verlängert und weist einen Ausschnitt 9 auf, durch welche die Lenkvorrichtung 1 und/oder Teile der Lenkplatte und Vorderradanordnung hindurchragen. Im hinteren Teil der Trittplatte ist eine Hinterradanordnung 4 um eine im Regelfall starre und nicht gelenkte Hinterachse 10 drehbar gelagert. Die Hinterradanordnung besteht typischerweise aus einem oder zwei Rädern. Die Trittplatte 3 ist mit dem Fachmann geläufigen Maßnahmen soweit versteift, daß sie das Gewicht eines Benutzers auch unter Berücksichtigung von Erschütterungen im Fahrbetrieb zu tragen im Stande ist. Die Trittplatte ist im skizzierten Beispiel als ebene Platte gezeichnet, im Realfall aber nicht auf eine solche Ausführungsform beschränkt. Insbesondere kann die Platte auch in Form einer durchbiegungssteifen Gitterkonstruktion ausgeführt sein und an ihrer Oberseite eine Trittfläche für einen Benutzer oder eine Last aufweisen.

Die Lenkplatte 7 ist mittels einer ringförmigen Kugellageranordnung 5 gegen die Trittplatte abgestützt. Der Durchmesser der Kugellageranordnung 5 ist größer als der Durchmesser des Ausschnitts 9 in der Trittplatte und kleiner als der Durchmesser der Lenkplatte 7. Die Ebene des Lagerrings ist im skizzierten Beispielsfall horizontal, kann aber zur Erzielung besonderer Fahr- und Lenkeigenschaften auch gegen die Horizontale leicht geneigt sein. Die Lenkachse 13, um welche die Lenkplatte 7 über die Lageranordnung 5 drehbar ist, ist dann im wesentlichen vertikal ausgerichtet. Die Lenkplatte 7 trägt Haltemittel zur Aufhängung einer Vorderradanordnung 2, welche im Regelfall durch ein einzelnes Rad gebildet ist, und zweite Haltemittel zur klappbaren Befestigung einer Lenkvorrichtung 1. Mit 8 ist der Drehpunkt für die durch den gebogenen Pfeil angedeutete Klappbewegung der Lenkvorrichtung 1 bezeichnet. Die Ebene des Lagerrings 5 liegt so tief, daß sie das Vorderrad 2 schneidet. Durch die tiefliegende Lagerebene kann auch der Drehpunkt 8 für die Klappbewegung der Lenkvorrichtung 1 tief gelegt werden, so daß sich in zusammengeklapptem Zustand ein äußerst geringes Packmaß des Fahrzeugs insbesondere senkrecht zu der Trittplatte 3 ergibt. Ein solches geringes Packmaß ist aus der Skizze der Fig. 2 ersichtlich.

Im Bereich der Vorderkante 3/A der Trittplatte 3 ist zur Unterseite hin eine Schlepprollenanordnung 6 aus vorzugsweise zwei in Fahrtrichtung quer zueinander beabstandet angeordneten Schlepprollen vorgesehen. Diese Schlepprollen ermöglichen wie aus Fig. 2 ersichtlich einen Transport des zusammengeklappten Fahrzeugs in ziehender Weise in schräger Stellung der Trittplatte 3 des Fahrzeugs. Die Schlepprollen 6 sind dabei hinter die Vorderkante 3/A der Trittplatte 3 zurückgesetzt, so daß bei senkrechter Stellung der Trittplatte 3 das Fahrzeug auf der Vorderkante der Trittplatte aufsteht und die Schlepprollen 6 vom Boden abgehoben sind. Dadurch ist ein sicherer anlehnender Stand des zusammengeklappten Fahrzeugs in platzsparender vertikaler Ausrichtung gewährleistet.

In zusammengeklappter Stellung ragt der Griffteil 1/A der Lenkvorrichtung 1 über die Hinterradanordnung hinaus, so daß insbesondere für den ziehenden Transport des Fahrzeugs eine gute Griffposition gegeben ist. Die Lenkvorrichtung ist in der zusammengeklappten Stellung mit der Trittplatte arretierbar. Für den tragenden Transport des zusammengeklappten Fahrzeugs bietet die Lenkvorrichtung in einer Zusammensetzung von mehreren Rohren mehrere Griffpositionen. Weitere Griffpositionen können an der Trittplatte 3 vorgesehen sein.

Die Draufsicht auf das Fahrzeug in zusammengeklapptem Zustand nach Fig. 3 zeigt das auch in den Querabmessungen günstige Packmaß in zusammengeklapptem Zustand. Ferner ersichtlich werden einige Einzelheiten der Lenkanordnung mit der drehbaren Lenkplatte 7, die eine Aussparung 11 aufweist, durch welche das Vorderrad 2 hindurchragt. Der Ausschnitt 9 in der Trittplatte 3 ist vorzugsweise kreisförmig. Die Vorderradachse ist in Fig. 3 mit 12 bezeichnet.

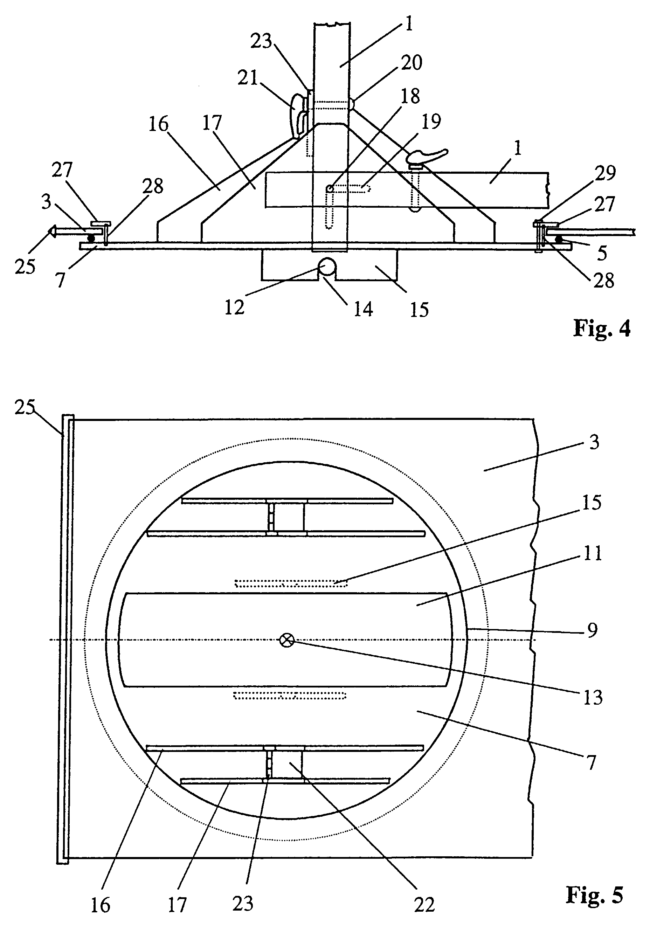

Die Figuren 4 und 5 zeigen einige Details einer bevorzugten Ausführungsform der Lageranordnung und der drehbaren Lenkplatte. Die Lenkplatte 7, die in dem skizzierten Beispiel als ebene Platte ausgeführt ist, weist an ihrer Unterseite erste Haltemittel 15 in Form von senkrecht zur Lenkplatte nach unten abstehenden Lagerplatten mit nach unten offenen Ausfallenden 14 zur Aufnahme der Vorderradachse 12 auf. Je nach Material der Lenkplatte 7 können die Halteplatten 15 beispielsweise zusammen mit der Platte ausgeformt, mit dieser verschraubt oder verschweißt, durch Umbiegen von Plattenteilen aus der Plattenebene oder in anderer, dem Fachmann in an sich bekannter Weise erzeugt werden.

An ihrer Oberseite trägt die Lenkplatte 7 zweite Haltemittel für die Befestigung der Lenkvorrichtung. Diese zweiten Haltemittel sind beispielsweise als zwei parallele, ungefähr dreieck- oder trapezförmige Führungsplatten ausgeführt, welche zwischen sich jeweils ein Rohr der Lenkvorrichtung 1 aufnehmen. Die zweiten Halteelemente enthalten ferner jeweils ein Anschlagelement, daß im skizzierten Beispielsfall als zwischen den Führungsplatten 16, 17 angeordnete Anschlagplatte 23 ausgeführt ist. Bei der Klappbewegung der Lenkvorrichtung von der Transportstellung in die Fahrstellung schlagen die Rohre der Lenkvorrichtung an die Anschlagplatten an und werden über Befestigungseinrichtungen insbesondere über mit den Rohren der Lenkvorrichtung verbundene Schnellspannverschlüsse 21 an den Anschlagplatten festgelegt. Die Klappbewegung zwischen der Fahrstellung und der Transportstellung erfolgt im skizzierten Beispielsfall um einen senkrecht zu den Führungsplatten 16, 17 durch den Zwischenraum zwischen diesen verlaufenden Bolzen 18, welcher in einem Langloch des jeweiligen Rohres der Lenkvorrichtung läuft. Beim Aufstellen der Lenkvorrichtung von der Transportstellung in die Fahrstellung schlägt die Lenkvorrichtung an dem Anschlagplatte 23 an und wird in dieser Anschlagposition unter Führung des Bolzens in dem Langloch 19 nach unten geführt. Dabei rutschen zum einen der Bolzen 20 des Schnellspannverschlusses in eine Nut der Anschlagplatte 23 und zum anderen das untere Ende des Rohres der Lenkvorrichtung in eine Aussparung 22 in der Lenkplatte. Durch Betätigen des Schnellspannverschlusses wird die Lenkvorrichtung in dieser nach unten verschobenen Position festgelegt. Durch das Eingreifen des Rohrendes in die Aussparung 22 der Lenkplatte ergibt sich für die Festlegung der Lenkvorrichtung in den Halteelementen der Lenkplatte ein vergrößerter Hebelarm. Der seitliche Abstand der zweiten Halteelemente 16, 17 von der Lenkachse 13 ist größer als der entsprechende Abstand der ersten Halteelemente 15. Die Platten der Ausführung der zweiten Halteelemente wie in Fig. 4 skizziert sind gemäß der Darstellung der Fig. 5 bis dicht an den Rand des kreisförmigen Ausschnitts 9 in der Trittplatte gelegt. Hierdurch lassen sich gute Hebelverhältnisse für die Stabilisierung der Lenkvorrichtung und die Übertragung von Lenkkräften erzielen. Eine günstige Kraftverteilung ergibt sich auch durch den großen Durchmesser der Lageranordnung 5, insbesondere auch gegenüber Roll- oder Nickbewegungen des Fahrzeugs oder der Lenkvorrichtung.

Die Lageranordnung ist in einem besonders einfachen Fall als eine Kugellageranordnung mit einer Mehrzahl von in einem Distanzring relativ zueinander positionierten Lagerkugeln ausgeführt, wobei die Kugeln ohne besonders ausgebildete Kugelbahnen auf planen Flächen von Lenkplatte 7 und Trittplatte 3 laufen können. Einzelheiten einer solchen bevorzugten Ausbildung der Lageranordnungen sind später noch beschrieben. Selbstverständlich sind eine Vielzahl von aus dem Stand der Technik bekannten Lageranordnungen für die Lagerung der Lenkplatte 7 gegenüber der Trittplatte 3 denkbar.

Soweit zweckmäßig oder erforderlich kann die Lenkplatte 7 noch in ihrer Beweglichkeit in der Ebene der ringförmigen Lageranordnungen durch gesonderte Führungsmittel geführt werden. Die Skizze nach Fig. 4 sieht hierzu beispielsweise einen kreiszylindrischen Führungsring 28 vor, welcher in einer Kreisnut der Lenkplatte 7 liegt und in den kreisförmigen Ausschnitt 9 der Trittplatte hineinragt. Der Außendurchmesser des Führungsrings ist geringfügig kleiner als der Innendurchmesser des kreisförmigen Ausschnitts 9 der Trittplatte. Alternativ oder zusätzlich zu dem Führungsring 28 können auch mehrere Führungsrollen vorgesehen sein, welche entlang des Innenrandes der Aussparung 9 angeordnet und mit der Lenkplatte 7 verbunden und um senkrecht zur Lagerebene verlaufende Achsen drehbar sind.

Um ein Lösen der Lagerung der Lenkplatte an der Trittplatte 3 bei Anheben der Trittplatte zu vermeiden, können Sicherungselemente vorgesehen sein, die mit der Lenkplatte verbunden sind und über den Rand des Ausschnitts 9 der Trittplatte greifen. Hierzu ist im Beispiel der Fig. 4 ein ebener und parallel zu der Lagerebene verlaufender Sicherungsring 27 vorgesehen, welcher wiederum eine Ringnut für den Führungsring 28 aufweist. Der äußere Rand des Sicherungsrings 27 ragt über den Rand des Ausschnitts 9 hinaus. Der Sicherungsring 27 ist über mehrere am inneren Umfang des Sicherungsrings verteilte Befestigungselemente 29 mit der Lenkplatte 7 verbunden und sichert so auf einfache und zuverlässige Weise ein Abheben der Trittplatte von der Lenkplatte.

Die im skizzierten Beispiel der Fig. 4 in Verbindung mit der Lenkplatte eingetragenen Führungs- und Sicherungselemente 27, 28, 29 können in äquivalenter Weise mit der Trittplatte 3 verbunden sein, nach unten weisen und am äußeren Rand der Lenkplatte 7 einwirken.

In Figuren 4 und 5 ist noch als vorteilhaftes Schutzelement an der Vorderkante der Trittplatte 3 eine Stoßleiste 25 aus elastischem Material angeordnet. Eine solche Stoßleiste kann die Gefahr von Beschädigungen durch das Fahrzeug an Gegenständen oder an Untergründen verringern.

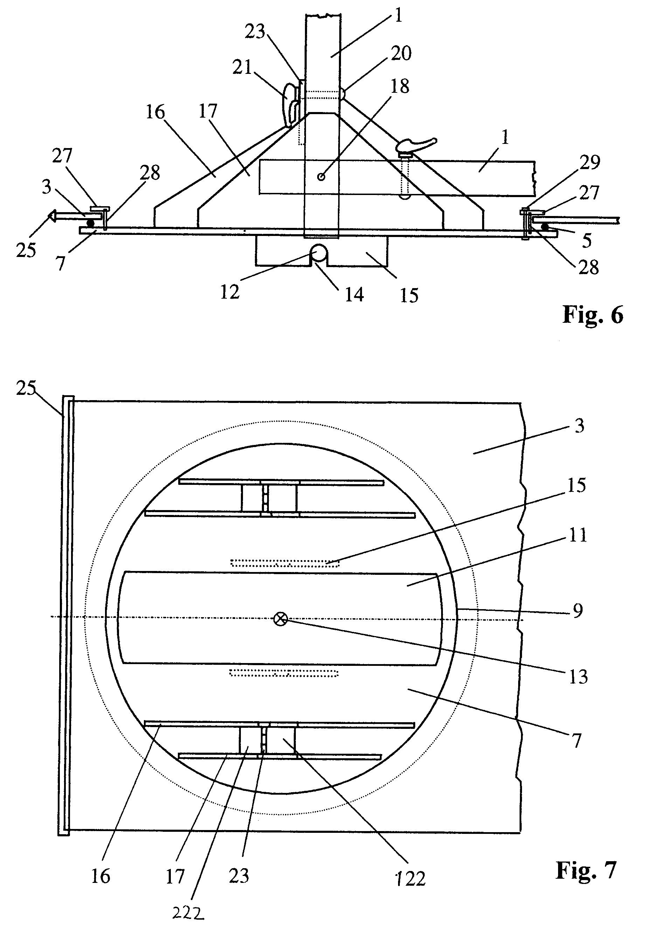

In Fig. 6 und Fig. 7 ist eine zu Fig. 4, 5 alternative Ausführung der Aufrichtung und Arrettierung der Lenkvorrichtung skizziert. Hierbei ist die Lenkvorrichtung ohne zusätzliche vertikale Verschiebemöglichkeit um den Bolzen 18 drehbar gelagert. Zur Befestigung im aufgerichteten Zustand ist der Schnellspannverschluß in Längsrichtung des Rohres der Lenkvorrichtung verschiebbar und rückt mittels dieser Verschiebbarkeit in eine Aussparung der Anschlagplatte ein. Das nach unten weisende Rohrende der Lenkvorrichtung greift vorzugsweise wieder in eine Aussparung 122 der Lenkplatte ein, wobei diese Aussparung 127 nach vorne eine Verlängerung 222 zeigt, durch welche das Rohrende der Lenkvorrichtung geschwenkt wird. Andere Ausführungen der Klappbarkeit der Lenkvorrichtung und deren Befestigung sind denkbar.

Die Schwenkachse für die Klappbewegung der Lenkvorrichtung liegt vorzugsweise noch unter der Oberkante des gelenkten Rades, so daß die Abmessungen des zusammengeklappten Fahrzeugs nicht oder nicht wesentlich durch den Schwenkmechanismus bestimmt sind.

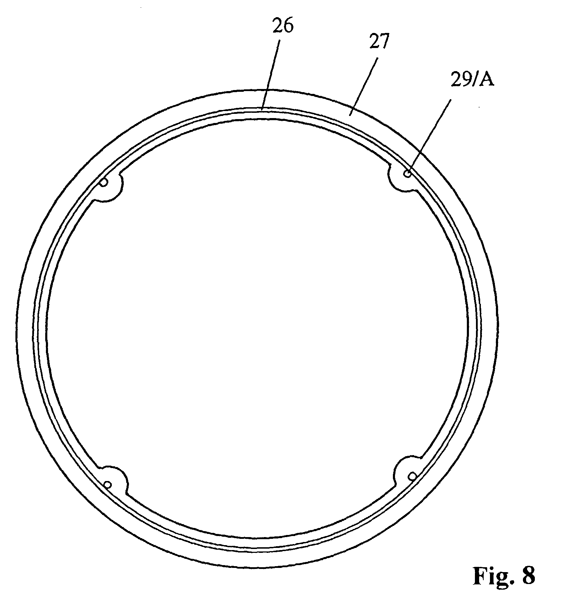

Die Fig. 8 zeigt eine vorteilhafte Ausführungsform eines Sicherungsrings 27 der in Fig. 4 eingezeichneten Art. Der Sicherungsring ist im wesentlichen kreisförmig und weist eine zum äußeren und inneren Umfang konzentrische Ringnut 26 auf, welche zur Aufnahme des Führungsringes 28 vorgesehen ist. In unmittelbarer Nähe dieser Ringnut 26 sind mehrere Bohrungen 29/A für Befestigungselemente 29 (Fig. 4) vorgesehen. Im Bereich der Bohrungen für die Befestigungselemente können Ausbuchtungen des inneren Ringrandes zur Stabilisierung des Ringmaterials an diesen Stellen vorgesehen sein.

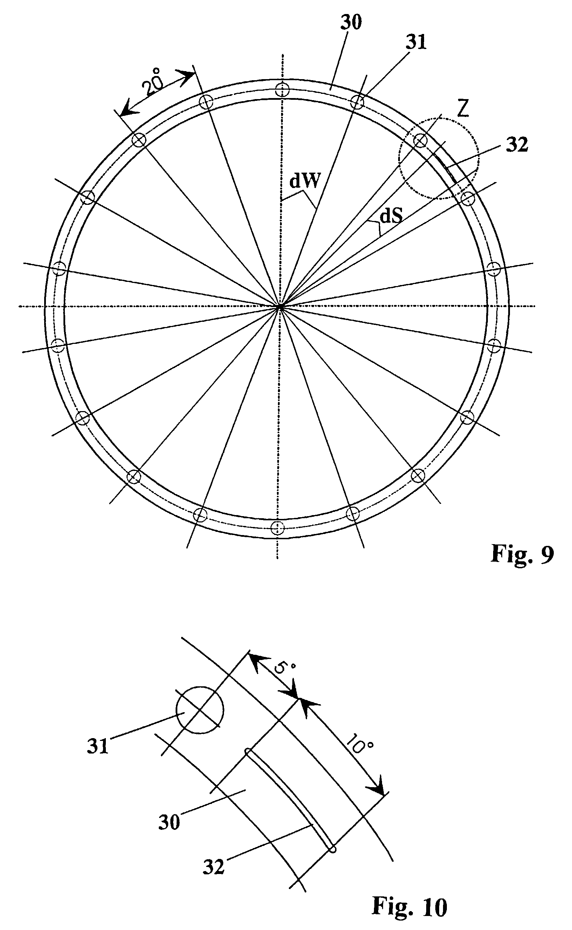

Die Figuren 9 bis 11 zeigen Einzelheiten einer vorteilhaften Ausführungen einer Lageranordnung mit einer Mehrzahl auf einem Ring geführter Kugeln. Die Kugelführung besteht dabei aus einem Distanzring mit in diesen eingesetzten Zentrierlamellen. In Fig. 9 skizziert ist der Distanzring 30, welcher auf dem Ringumfang verteilt eine Mehrzahl von Durchbrüchen oder Bohrungen 31 als Aufnahmen für Lagerkugeln sowie zwischen den Durchbrüchen Schlitze 32 zur Aufnahme von Zentrierlamellen aufweist. Die Durchbrüche 31 sind vorzugsweise regelmäßig, d.h. um gleiche Winkelsegmente dW gegeneinander versetzt, auf dem Distanzring verteilt angeordnet. Der Durchmesser der Durchbrüche 31 ist geringfügig größer als der Durchmesser der einzusetztenden Lagerkugeln.

Der Winkel dS über welchen sich ein Schlitz 32 erstreckt, beträgt vorteilhafterweise das 0,3- bis 0,6-fache, vorzugsweise das 0,5-fache des Winkelsegments dW, mit welchem sich die Ringstruktur wiederholt. Beispielsweise ist dW gleich 20° und dS gleich 10°. Bei deutlich größeren Werten für dW können auch mehrere getrennte Schlitze zwischen 2 Kugelaufnahmen vorgesehen sein mit entsprechend reduziertem Winkel dS.

In die Schlitze werden Zentrierlamellen eingesteckt, die vorzugsweise aus einem flachen und ebenen Material entnommen sind und elastisch verformbar sind. Durch die beim Einstecken in die Schlitze erzwungene Biegung ergibt sich eine elastisch verspannte, selbsthaltende Lage der Lamellen in den Schlitzen.

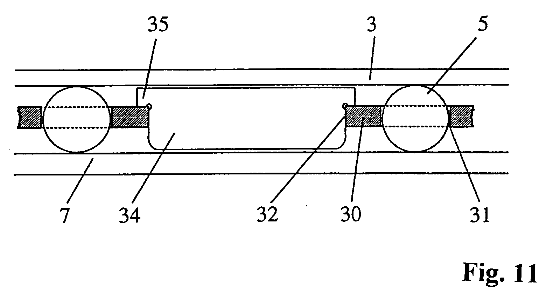

Die Fig. 11 zeigt eine zusammengesetzte Lageranordnung, aus welcher auch eine vorteilhafte Form der Zentrierlamellen ersichtlich wird. Die Lenkplatte 7 und die Trittplatte 3 sind im Bereich der Lageranordnungen durch die Lagerkugen 5 in einem Abstand gehalten, der durch die Kugeldurchmesser und evtl. vorhandene Kugelbahnen definiert ist. Für den Fall, daß die Lagerkugeln direkt auf Planenflächen der Platten laufen, ist der Abstand der Planenflächen gleich dem Durchmesser der Lagerkugeln. Die Lagerkugeln sind in den Durchbrüchen 31 des Distanzrings 30 in definierter gegenseitiger Lage geführt. In die Schlitze 32 des Distanzrings 30 sind Zentrierlamellen 34 eingesetzt, welche auf einer Seite, beispielsweise wie im skizzierten Fall zwischen Distanzring 30 und Trittplatte 3 nach beiden Richtungen über die Schlitzbreite überstehende Abschnitte 35 aufweisen. Diese überstehenden Abschnitte dienen beim Einstecken der Lamellen und während des Lagerbetriebs als Anschläge für die Lamellen in den Schlitzen des Distanzrings. Die Höhe der Zentrierlamellen ist geringfügig geringer als der Durchmesser der Lagerkugeln. Die Höhe der überstehenden Abschnitte 35 ist so bemessen, daß die Zentrierlamellen auf beiden Seiten des Distanzrings in Richtung senkrecht zu der Ebene des Distanzrings um etwa gleiche Maße überstehen und somit den Distanzring zumindest annähernd in der Mitte zwischen den Kugellaufflächen halten. Beispielsweise ist bei einer Kugeldicke von 4,7 mm und einer Dicke des Distanzrings von 1,5 mm die Höhe der Zentrierlamellen zu 4,5 mm und die Höhe der überstehenden Abschnitte 35 zu 1,5 mm gewählt. Vorzugsweise werden die Zentrierlamellen in benachbarten Schlitzen des Distanzrings jeweils von wechselnder Seite eingesteckt.

Der vorstehend beschriebene Aufbau einer Kugelführung für ein Kugellager mit einem flachen Distanzring und in Schlitze eingesteckten Zentrierlamellen ist über den vorliegenden Anwendungsbereich hinaus allgemein vorteilhaft einsetzbar, insbesondere bei ringförmigen Lageranordnungen mit gegenüber dem Kugeldurchmesser großem Ringdurchmesser und nur dünner Kugelbestückung.

Die Erfindung ist nicht auf die beschriebenen Ausführungsbeispiele beschränkt, sondern im Rahmen fachmännischen Könnens in mancherlei Weise abwandelbar.

## Patentansprüche

1. Klappbares Transportfahrzeug mit einem über eine Lenkvorrichtung lenkbaren Vorderrad, wobei die Lenkvorrichtung zwischen einer aufrechten Fahrstellung und einer zusammengeklappten Stellung bezüglich einer Trittplatte veränderbar ist, dadurch gekennzeichnet, daß eine Lenkplatte um eine im wesentlichen vertikale Längsachse in einem Ausschnitt der Trittplatte dieser gegenüber drehbar und mittels einer ringförmigen Lageranordnung gegen die Trittplatte abgestützt ist, wobei die Ebene des Lagerrings das Vorderrad schneidet, und daß die Lenkplatte erste Haltemittel für die Aufhängung des Vorderrads und zweite Haltemittel für die klappbare Befestigung der Lenkvorrichtung trägt.

2. Fahrzeug nach Anspruch 1, dadurch gekennzeichnet, daß die Lenkplatte eine Aussparung aufweist, durch welche das Vorderrad hindurchragt.

3. Fahrzeug nach Anspruch 1 oder 2, dadurch gekennzeichnet, daß die ersten Haltemittel für die Aufhängung des Vorderrads von der Lenkplatte nach unten weisen.

4. Fahrzeug nach einem der Ansprüche 1 bis 3, dadurch gekennzeichnet, daß die Trittplatte einen zur Lenkachse konzentrischen Kreisausschnitt aufweist.

5. Fahrzeug nach einem der vorhergehenden Ansprüche, dadurch gekennzeichnet, daß die Trittplatte eine Trittfläche aufweist.

6. Fahrzeug nach einem der vorhergehenden Ansprüche, dadurch gekennzeichnet, daß im Bereich der vorderradseitigen Abschlußkante der Trittplatte Schlepprollen vorhanden sind.

7. Fahrzeug nach einem der vorhergehenden Ansprüche, dadurch gekennzeichnet, daß die zweiten Befestigungsmittel Klappführungen mit Anschlagmitteln für die Lenkvorrichtung aufweisen, und daß die Lenkvorrichtung für die Fahrstellung an den Anschlagmitteln festlegbar ist.

8. Fahrzeug nach Anspruch 7, dadurch gekennzeichnet, daß die Festlegung der Lenkvorrichtung an den Anschlagmitteln mittels eines oder mehrerer Schnellspannhebel erfolgt.

9. Fahrzeug nach einem der vorhergehenden Ansprüche, gekennzeichnet durch ein auf eine Radanordnung wirkendes motorisches Antriebsmodul.

10. Fahrzeug nach einem der vorhergehenden Ansprüche, dadurch gekennzeichnet, daß die Radanordnungen Luftbereifungen aufweisen.

11. Lageranordnung, insbesondere für ein Fahrzeug nach einem der vorhergehenden Ansprüche, dadurch gekennzeichnet, daß ein ebener Distanzring eine Mehrzahl von Durchbrüchen und gebogenen Schlitzen senkrecht zur Ringebene aufweist, daß in den Durchbrüchen Lagerkugeln geführt sind und daß in die Schlitze Zentrierlamellen eingesteckt sind, welche den Ring zumindest annähernd mittig zwischen gegenüberliegenden Laufflächen der Lageranordnung halten.
